# EUROPEAN PATENT SPECIFICATION

(11) **EP 3 404 867 B1**
(45) Date of publication and mention of the grant of the patent: **08.01.2020**
(21) Application number: 17171773.9
(22) Date of filing: 18.05.2017
(51) Int. Cl.: H04L 9/08, G09C 1/00, H04L 12/801

(54) **CONFIGURABLE SERVICE PACKET ENGINE EXPLOITING FRAMES PROPERTIES**
KONFIGURIERBARE DIENSTPAKET-ENGINE MIT AUSNUTZUNG VON RAHMENEIGENSCHAFTEN
MOTEUR DE PAQUETS DE SERVICE CONFIGURABLE EXPLOITANT LES PROPRIÉTÉS DES TRAMES

(43) Date of publication of application: 21.11.2018
(73) Proprietor: ID Quantique S.A., 1227 Carouge (CH)
(72) Inventor: Monat, Laurent, 01280 Prevessins-Moëns (FR); Kirakossian, Emmanuel, 01220 Divonne-Les-Bains (FR); Christiansson, Thorsten, 1295 Mies (CH); Domergue, Mathias, 1202 Genève (CH)
(74) Representative: Kraus & Weisert Patentanwälte PartGmbB

(56) References cited:
- US-A- 5 751 723
- US-A- 5 944 843
- THEODORE G HANDEL ET AL: "Hiding data in the OSI network model", 30 May 1996 (1996-05-30), INFORMATION HIDING, SPRINGER BERLIN HEIDELBERG, BERLIN, HEIDELBERG, PAGE(S) 23 - 38, XP019185449, ISBN: 978-3-540-61996-3 * abstract * * pages 28-32 *
- CAMPOLO C ET AL: "CRaSCH: A cooperative scheme for service channel reservation in 802.11p/WAVE vehicular ad hoc networks", ULTRA MODERN TELECOMMUNICATIONS&WORKSHOPS, 2009. ICUMT '09. INTERNATIONAL CONFERENCE ON, IEEE, PISCATAWAY, NJ, USA, 12 October 2009 (2009-10-12), pages 1-8, XP031574506, ISBN: 978-1-4244-3942-3
- SEBASTIAN ZANDER ET AL: "A survey of covert channels and countermeasures in computer network protocols", IEEE COMMUNICATIONS SURVEYS AND TUTORIALS, INSTITUTE OF ELECTRICAL AND ELECTRONICS ENGINEERS, US, vol. 9, no. 3, 1 July 2007 (2007-07-01), pages 44-57, XP011383439, ISSN: 1553-877X, DOI: 10.1109/COMST.2007.4317620

## Description

The present invention generally relates to the field of encryption technology. More specifically, the invention relates to a method and an apparatus for transmitting service channel information over an encrypted channel. Even more specifically, the invention allows the transmission of the service channel information without changing the latency of the data flow.

### Prior art

The use of encryption for transmission of data over networks is becoming more and more important. As the current technology used for implementing the network channels cannot generally protect from eavesdropping, one way of protecting the data is to encrypt it at the transmitter and decrypting it at the receiver.

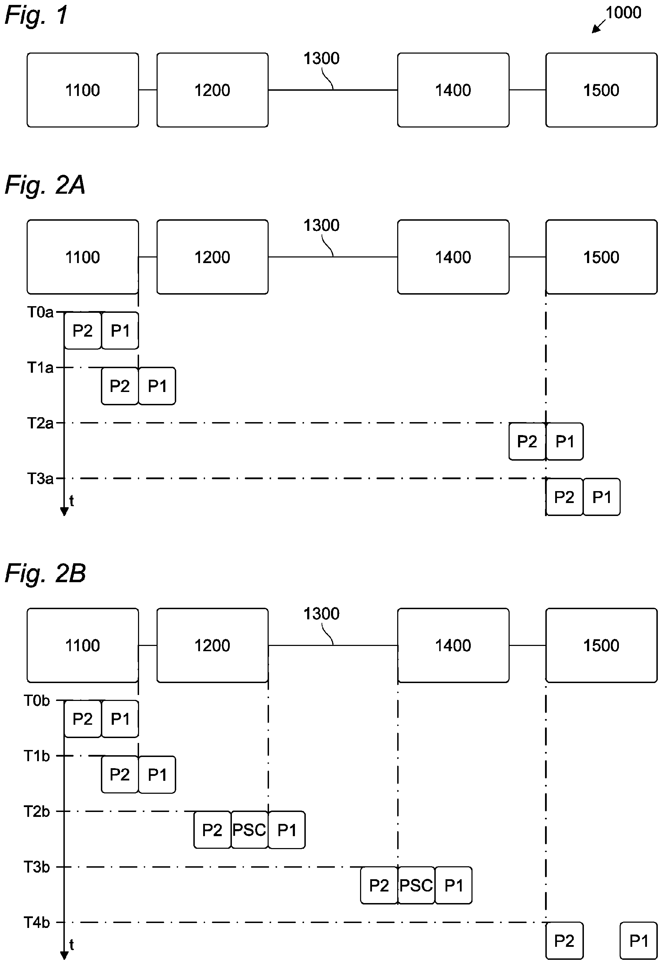

Figure 1 schematically illustrates a network 1000 in which data is transmitted from a transmitter 1100 to a receiver 1500 over an encrypted channel 1300. In particular, in order to create the encryption channel 1300, an encryption unit 1200 encrypts the data before forwarding it to the channel 1300. A corresponding decryption unit 1400 decrypts the data before passing it on to the receiver 1500.

Generally, it is preferable to configure the encryption unit 1200 and the decryption unit 1400 so as to be transparent to the transmitter 1100 and to the receiver 1500. That is, the transmitter 1100 and the receiver 1500 operate without knowledge of the presence of the encryption unit 1200 and of the decryption unit 1400. This approach is preferable as it allows the retrofit of the encryption unit 1200 and decryption unit 1400 to already existing networks 1000. Also, it allows the technology for the encryption unit 1200 and the decryption unit 1400 to be updated without any changes to the transmitter 1100 and to the receiver 1500. Finally, by keeping the transmitter 1100 and receiver 1500 operating independently of the encryption unit 1200 and the decryption unit 1400 it is possible to more easily manage the two systems, as no complex interdependence is created.

The encryption unit 1200 and the decryption unit 1400 generally need to exchange data, which will be referred to as service channel information. This data can be, for instance, encryption keys, which are periodically changed to increase security. In general it can be any information needed for operating the encryption. For instance, one physical encrypted channel 1300 may comprise a plurality of logical encrypted channels, the number and characteristics of which can change over time. These information need to be shared between the encryption unit 1200 and the decryption unit 1400. Thus, there is a need for the encryption unit 1200 and the decryption unit 1400 to exchange service channel information.

One possible approach for exchanging service channel information consists in allowing the encryption unit 1200 to insert the service channel information in the stream of data from the transmitter 1100 before forwarding the modified stream of data to the channel 1300.

This however presents a disadvantage. In particular, this changes the latency between the transmitter and the receiver, depending on whether service channel information packets are inserted or not. This will be more clearly understood with reference to figures 2A and 2B.

Figure 2A schematically illustrates a time flow for the transmission of two packets P1 and P2 from the transmitter 1100 to the receiver 1500 without the insertion of any service channel information. The packets P1, P2 could be data packet, control packet, or more generally any packets transmitted from the transmitter 1100 to the receiver 1500. At a time T0a the packet P1 leaves the transmitter 1100. At a time T1a the packet P2 leaves the transmitter 1100. The delay from the transmitter 1100 to the receiver 1500 has a value DT. At a time T2a equal to TOa+DT the packet P1 reaches the receiver 1500. At a time T3a equal to T1a+DT the packet P2 reaches the receiver 1500. The difference in time between T3a and T2a is the same as between T1a and T0a which means that the latency between subsequent packets P1 and P2 is maintained at the receiver 1500 to the same value it had at the transmitter 1100.

Figure 2B schematically illustrates a time flow for the transmission of two packets P1 and P2 from the transmitter 1100 to the receiver 1500 with the insertion of one packet PSC containing service channel information. At a time T0b the packet P1 leaves the transmitter 1100. At a time T1b the packet P2 leaves the transmitter 1100. The latency between packets P1 and P2 is the same as it was in the case of figure 2A.

However, due to the need of the encryption unit 1200 to transmit service channel information to the decryption unit 1400, a time T2b, after having transmitted the encrypted packet P1 into the encrypted channel 1300, the encryption unit 1200 inserts one packet PSC containing service channel information. After having transmitted the PSC packet, the encrypted packet P2 is then transmitted into the encrypted channel 1300. At a time T3b, the packet PSC containing service channel information is received at the decryption unit 1400, where it can be used for its intended purpose and it is removed from the decrypted packet stream forwarded to the receiver 1500. The packet P2 is then finally received at the receiver at a time T4b.

As visible in figure 2b the latency between the packets P1 and P2 has changed, in particular it has increased, between the transmitter 1100 and the receiver 1500. Since the transmitter 1100 and the receiver 1500 operate without knowledge of the presence of the encryption unit 1200 and of the decryption unit 1400, the receiver 1500 assumes the latency between packets P1 and P2 to be correctly representative of the latency between those packets at the transmitter 1100. This is, however, incorrect.

The change in latency can cause mistakes in the interpretation of the received data. In some cases it may cause the network 1000 to malfunction or to not operate at all. For instance, if the network 1000 is a computer network where the packets P1 and P2 belong to the Precision Time Protocol, in the following PTP, the PTP will fail or cause the receiver 1500 to operate incorrectly. As many operations of the network 1000 base their correct functioning on the clock synchronization achieved through the PCPT, different operations of network 1000 may malfunction of not operate at all.

There is therefore a need to provide a method and a device for transmitting service channel information over an encrypted channel 1300 in a network 1000, without changing the latency between packets.

Methods for including data into portions of the data stream are known, for instance, from article "Hiding data in the OSI network model" by Theodore G. Handel et al, and from documents US 5 944 843 A or US 5 751 723 A.

### Summary of the invention

It is the general approach of the invention to recognize that not all packets sent from the transmitter to the receiver have their entire payload full. In particular, some packets can have a minimum length, or a fixed length, as specified by the respective protocol, and this can lead to cases where not all of the bits are used. By recognizing those packets at the encryption unit it is possible to add the service channel information in those packets, thereby avoiding inserting additional packets in the packet stream.

An embodiment of the invention can relate to an encryption unit for encrypting at least one packet according to a predetermined cryptographic protocol, wherein the predetermined cryptographic protocol requires exchanging of service channel information, wherein the service channel information has a first bit length, the encryption unit comprising: a packet analyzer configured to recognize whether at least one packet has unused bits, a packet builder configured to insert service channel information in the packet if the number of unused bits is equal to or larger than the first bit length, an encryption engine configured to encrypt the packet according to the predetermined cryptographic protocol, wherein the packet is a SCC packet of a Multiprotocol Label Switching Protocol, or an ESMC packet of a Multiprotocol Label Switching Protocol, or a BFD packet according to the RFC5880 standard.

This is particularly advantageous as it allows to use already existing packets to additionally transmit service channel information thereby not impacting the transmission latency between the various packets in the data stream.

In some embodiments, the packet analyzer can be configured to recognize whether the packet has unused bits by: - recognizing a predetermined value within the packet, and/or - recognizing a specific value for one or more fields of the packet.

This is particularly advantageous as it allows to efficiently recognize the packet which can be used for transmitting the service channel information without analyzing the entire content of the packet, which may require too many computational resources.

This is particularly advantageous as those packets comprises unused portions, at least in some of their possible implementations, which are compatible with the transmission of service channel information. Moreover those packets have a frequency and a payload which is statistically advantageously compatible with the service channel information to be transmitted.

In some embodiments, the service channel information can comprise data and/or an address for the data.

This is particularly advantageous as it allows to transmit service channel information to different points within the network and/or relating to different logically encrypted channels. A further embodiment of the invention can relate to a decryption unit for decrypting at least one packet according to a predetermined cryptographic protocol, wherein the predetermined cryptographic protocol requires exchanging of service channel information, wherein the service channel information has a first bit length, the decryption unit comprising: a decryption engine configured to decrypt the packet, a packet analyzer configured to determine if at least one of the packets comprises the service channel information, a packet reader configured to remove the service channel information from the packet, wherein the packet is a SCC packet of a Multiprotocol Label Switching Protocol, or an ESMC packet of a Multiprotocol Label Switching Protocol, or a BFD packet according to the RFC5880 standard.

This is particularly advantageous as it allows to recognize which packet is incorporating the service channel information, extract the data and possibly return the packet to its previous state. In this manner, the transmission of the service channel information is transparent to the rest of the network.

In some embodiments, the packet analyzer can be configured to recognize whether the packet comprises the service channel information by: - recognizing a predetermined value within the packet, and/or - recognizing a specific value for one or more fields of the packet.

This is particularly advantageous as it allows to efficiently recognize which packets comprise service channel information without inserting additional packets in the data stream but only resorting to packets which are already used. Moreover, by not having to analyze the entire content of each incoming packet, but only a part of it, it is possible to reduce the computational resources needed for recognizing which packets carry the service channel information.

An embodiment of the invention can further relate to a cryptographic unit for encrypting and/or decrypting at least one packet according to a predetermined cryptographic protocol, wherein the predetermined cryptographic protocol requires exchanging of service channel information, wherein the service channel information has a first bit length, the cryptographic unit comprising: a packet receiver configured to determine if at least one of the packets comprises service channel information and to remove service channel information from the packet, an encryption/decryption engine configured to encrypt and/or decrypt the packet, a packet sender configured to recognize whether at least one of the packets has unused bit and to insert service channel information in the packet if the number of unused bits is equal to or larger than the first bit length, wherein the packet is a SCC packet of a Multiprotocol Label Switching Protocol, or an ESMC packet of a Multiprotocol Label Switching Protocol, or a BFD packet according to the RFC5880 standard.

This is particularly advantageous as it allows the cryptographic unit to carry out the functionalities of both the encryption unit and of the decryption unit described above. This allows the cryptographic unit to be used several times along a network, for instance in series, where each cryptographic unit can exchange service channel information with any other cryptographic unit in the network.

### Brief description of the drawings

Figure 1 schematically illustrates a network in which data is transmitted from a transmitter to a receiver over an encrypted channel;
Figure 2A schematically illustrates a time flow for the transmission of two packets from a transmitter to a receiver without the insertion of any service channel information;
Figure 2B schematically illustrates a time flow for the transmission of two packets from a transmitter to a receiver with the insertion of one packet containing service channel information;
Figure 3 schematically illustrates a network comprising an encryption unit and a decryption unit in accordance with embodiments of the invention;
Figure 3A schematically illustrates an encryption unit in accordance with an embodiment of the invention;
Figure 3B schematically illustrates a decryption unit in accordance with an embodiment of the invention;
Figure 3C schematically illustrates a cryptographic unit in accordance with an embodiment of the invention;
Figure 4 schematically illustrates the structure of an empty SCC packet of a Multiprotocol Label Switching protocol;
Figure 5 schematically illustrates the structure of a modified SCC packet in accordance with an embodiment of the invention;
Figure 6 schematically illustrates the structure of an ESMC packet of a Multiprotocol Label Switching protocol;
Figure 7 schematically illustrates the structure of a BFD packet.

### Description of preferred embodiments

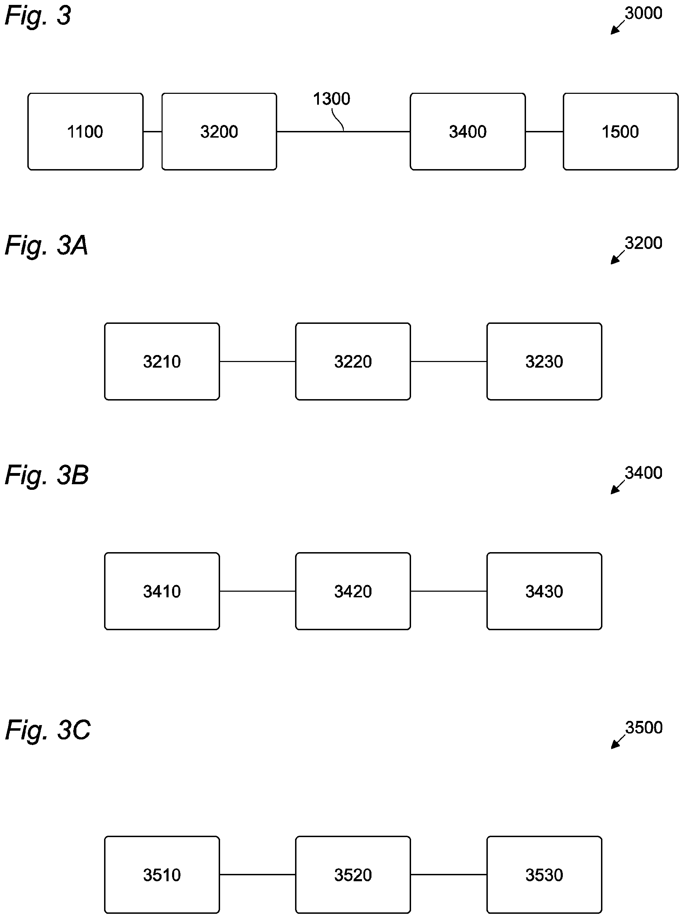

Figure 3 schematically illustrates a network 3000 in which data is transmitted from a transmitter 1100 to a receiver 1500 over an encrypted channel 1300. In particular, in the network 3000 the encryption and decryption are carried out by an encryption unit 3200 and a decryption unit 3400 in accordance with embodiments of the invention.

Figure 3A schematically illustrates the encryption unit 3200. The encryption unit 3200 is configured for encrypting at least one packet P1, P2 according to a predetermined cryptographic protocol, wherein the predetermined cryptographic protocol requires exchanging of service channel information, wherein the service channel information has a first bit length.

In particular, the encryption unit 3200 comprises a packet analyzer 3210 configured to recognize whether the packet (P1, P2) has unused bits, a packet builder 3220 configured to insert the service channel information in the packet P1, P2 if the number of unused bits is equal to or larger than the first bit length, and an encryption engine 3230 configured to encrypt the packet P1, P2 according to the predetermined cryptographic protocol.

The packet analyzer 3210 analyzes the incoming packets and recognize whether the packet P1, P2 has any unused bits.

In some embodiments, this can be achieved by the packet analyzer 3210 by storing the characteristics of a plurality of packets, analyzing the incoming packets P1, P2 with respect to the stored characteristics so as recognize which incoming packets P1, P2 have unused bits. For instance, it is common for packets to have a plurality of fields, not all of which are always used. When some of the fields are not used their content is generally set to a predetermined value. By recognizing the predetermined value within the packet or within one or more of the fields, it can be recognized that the respective bits are not used. Alternatively, or in addition, those fields can have headers, themselves being fields, which specify whether the field has a payload and/or the size of the payload. By recognizing a specific value for one or more headers it is possible to determine the number of unused bits. The bits which are not used for the payload can be considered as unused bits. In some embodiments, it can also be achieved by the packet analyzer 3210 by storing the characteristics of a plurality of packets which are always transmitted with a payload at least partially empty, analyzing the incoming packets with respect to the stored characteristics and recognizing the packets corresponding to the stored characteristics .

Specific examples on how the packet analyzer 3210 can identify unused bits will be provided further in the description, for instance with reference to SCC, ESMC and BFD packets. Those packets are not selected randomly but have been recognized by the inventors as statistically having a frequency and a payload advantageously compatible with the transmission of service channel information.

The packet builder 3220 is connected to the packet analyzer 3210 so as to receive the packets and so as to receive the information on whether the incoming packet has unused bits as well as the number of unused bits. The connection can be the same used for transferring the packets from the packet builder 3220 to the packet analyzer 3210 or can be a separate connection, not shown in the drawings. If the number of unused bits is equal to or larger than the first bit length of the service channel information, the packet analyzer 3210 inserts the service channel information in the packet by replacing the unused bits with bits of the service channel information.

The encryption engine 3230 can be any kind of encryption engine capable of encrypting the incoming packets according to a predetermined cryptographic protocol. The predetermined cryptographic protocol which requires exchanging of service channel information between a transmitter and a receiver, such as AES CTR, AES GCM 256-bit, AES GCM. It will be clear that the packet analyzer 3210, and/or the packet builder 3220, and/or the encryption engine 3230 can be configured depending on the specific cryptographic protocol. For instance, if a given cryptographic protocol needs to transmit a service channel information having a length of X bits, the packet analyzer 3210 will be configured to recognize those packets P1, P2 having unused bits. Preferably, the packet analyzer 3210 will be configured to recognize those packets P2, P3 having a number of unused bits equal to or larger than X. In some embodiments, the characteristics of the packets used for transporting the service channel information can be known, for instance by referring to the standard definition of the packets, and the service channel information can be sized to a predetermined value equal to, or smaller than, the predetermined available space in the packet under consideration.

It will also be clear that not all incoming packets need to be encrypted. For instance, in some embodiments, depending on the type of packet, which may be recognized by the packet analyzer 3210, it is possible to bypass the packet, authenticate the packet, authenticate and encrypt a packet, etc.

The specific cryptographic protocol defines the service channel information characteristics, such as structure, frequency and bit length. For instance, some of the channel information characteristics to be transmitted may relate to an Session Key, Acknowledgement packets, Keep alive packet, etc.

In one exemplary embodiment, the service channel information for a session key distribution can comprise a Signal ID field, preferably of 32 bits, a Tunnel ID field, preferably of 64 bits, a Key Bank field, preferably of 32 bits, an Initialization vector field, preferably of 64 bits, a session key field, preferably of 256 bits and, in some additional embodiments, 32 unused bits so as to reach a total of 480 bits. The service ID field can be a unique ID of the signal, or message type, sent over the service channel. The tunnel ID field can be a UNEM-wide Tunnel ID. The key bank field can be an index of the key bank the FPGA has to use. This index can be managed by an ESW. The initialization vector field can be used by the session key encryption/decryption. This can be used by a AES CTR algorithm.

In one additional exemplary embodiment, the service channel information for a KeyArmedOK message can comprise a Signal ID field, preferably of 32 bits, a Tunnel ID field, preferably of 64 bits, a Key Bank field, preferably of 32 bits, an Initialization vector field, preferably of 64 bits, a KeyArmedOK field, preferably of 128 bits and, in some additional embodiments, 160 unused bits so as to reach a total of 480 bits.

Thanks to the packet builder 3220, such service channel information can be inserted into the packets P1, P2 recognized by the packet analyzer 3210 as having a sufficient number of unused bits, so as to advantageously maintain the latency of the packets between the transmitter 1100 and the receiver 1500, since the total number of bits doesn't change.

Although in this embodiment the packet analyzer 3210, the packet builder 3220, and the encryption engine 3230 are positioned in this order on the packet path, the present invention is not limited thereto. In general, the only requirement is that the packet builder 3220 follows the packet analyzer 3210 as it has to operate based on the input provided by the packet analyzer 3210. However, the position of the encryption engine 3230 with respect to those two other elements can be set freely. In particular, it may not be necessary to position the encryption engine 3230 after the packet builder 3220. In fact, in some cases, the service channel information may be added unencrypted to the encrypted packet P1, P2. In some other cases, the packets P1, P2 to which the service channel information is added may not be encrypted at all by the encryption engine 3230.

Figure 3B schematically illustrates a decryption unit 3400 in accordance with an embodiment of the invention. In particular, in some embodiments, the decryption unit 3400 can advantageously cooperate with the encryption unit 3200.

The decryption unit 3400 is configured for decrypting at least one packet P1, P2 according to a predetermined cryptographic protocol, wherein the predetermined cryptographic protocol requires exchanging of service channel information and wherein the service channel information has a first bit length.

More specifically, the decryption unit 3400 comprises a decryption engine 3410 configured to decrypt the packet P1, P2, a packet analyzer 3420 configured to determine if at least one of the packets P1, P2 comprises the service channel information, and a packet reader 3430 configured to remove the service channel information from the packet P1, P2.

The decryption engine 3410 can operate with any predetermined cryptographic protocol such as AES CTR, AES GCM 256-bit, AES GCM. More generally, the decryption engine 3410 can operate with the same cryptographic protocol of the encryption engine 3230.

The packet analyzer 3420 can be configured so as to determine the presence of the service channel information within the packets P1, P2.

In some embodiments, this can be achieved by the packet analyzer 3420 by storing the characteristics of a plurality of packets, analyzing the incoming packets P1, P2 with respect to the stored characteristics so as recognize which incoming packets P1, P2 contain service channel information. For instance, it may be possible to always add the service channel information to a predetermined kind of packet. By recognizing such predetermined kind of packet, the packet analyzer 3420 can inform the decryption engine 3410 of the arrival of the predetermined kind of packet. Alternatively, or in addition, the fields of the incoming packets P1, P2 can have headers which specify whether the field has been used for storing service channel information. By analyzing the header, or more generally speaking the fields, it is possible to determine if service channel information is stored or not in the incoming packet P1, P2.

The packet reader 3430 can be informed by the packet analyzer 3420 of the presence of the service channel information within the incoming packet P1, P2. When an incoming packet contains a service channel information, the packet reader 3430 will read the service channel information from the incoming packet P1, P2. In some embodiments, the packet reader 3430 can then subsequently erase the service channel information from the incoming packet P1, P2 or replace it with a predetermined value. In those cases in which the header of the packet and/or of some field of the packet has been modified by the packet builder 3220 to indicate the presence of service channel information in the incoming packet P1, P2, the packet reader 3430 may also modify the value of the header or field to its original predetermined value.

As for the encryption unit 3200, the relative position of the decryption engine 3410, of the packet analyzer 3420 and of the packet reader 3430 is not necessarily the one illustrated in figure 3B. In alternative embodiments, those three elements may be connected differently, as long as the packet reader 3430 is connected to the packet analyzer 3420 so as to receive the information identifying those packets P1, P2 comprising service channel information. Furthermore, in some embodiments, as previously described for the encryption unit 3200, the encryption engine 3410 maybe position after the packet analyzer 3420 and/or after the packet reader 3430, as it may be possible that the service channel information is added unencrypted to the incoming encrypted packets P1, P2, or that the incoming packets P1, P2 carrying service channel information are not encrypted at all.

In general, SCC packets could be used as packets P1, P2 for transferring the service channel information. SCC packets can be configured in different forms and, in the following, one specific example will be provided of how a specific SCC packet can be modified to include the service channel information. It will however be clear to those skilled in the art that other modifications are possible as long as the SCC packet has available payload in form of unused bits.

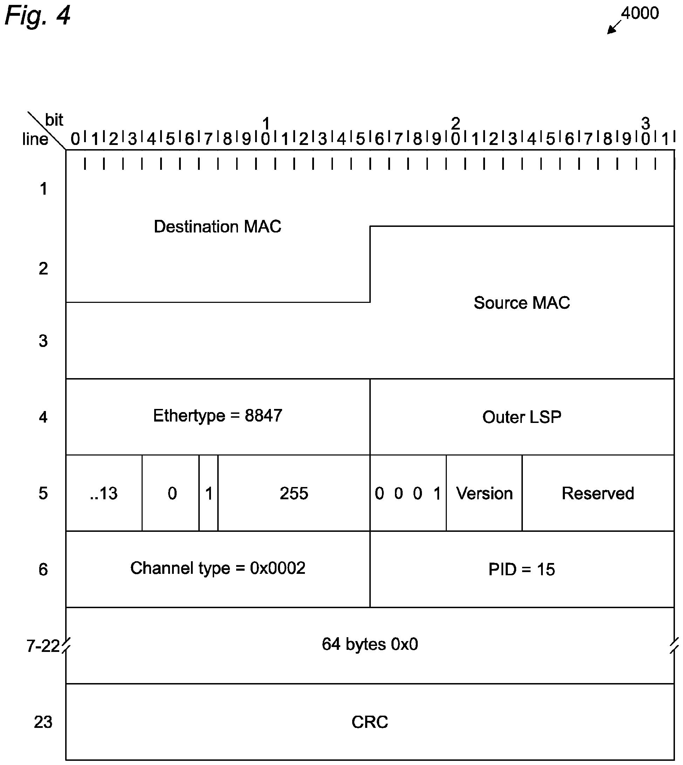

Figure 4 schematically illustrates the structure of a SCC packet 4000 of a Multiprotocol Label Switching protocol which can, in a specific non-limiting embodiment, be the type of packet used for transmitting the service channel information.

The detailed definition of the structure of SCC packets can be found in the respective ITU-T documentation, such as ITU-T G.8113.2/Y.1372.2 and ITU-T G.7712/Y.1703, the content of which is herewith incorporated by reference. In general, SCC stands for Signaling Communication Channel in MPLS, which is a standard packet dedicated to exchange signaling communications between nodes. The SCC packet 4000 illustrated in figure 4 is one possible implementation of a SCC packet. Other implementations are possible. In general, the SCC structure remains the same but some values may change such as "Channel type" and PIDs depending on the type of signaling message to be transmitted.

In some cases, the SCC packet 4000 can be sent partially or totally empty on the network 3000. This can be the case, for instance, for the payload present in lines 7-22 of the SCC packet 4000, consisting of a total of 64 Bytes, which may not be used. In this specific embodiment, the packet analyzer 3210 analyzes the incoming packets and recognizes a partially or totally empty SCC packet. As an exemplary identification method, identification can be by recognizing some predetermined values for the fields and/or headers of the SCC packet. For instance, the combination of
- ethertype "8847" for bits 0-15 in line 4
- outerlabel "..13" for bits 0-4 in line 5,
- channel type "0x0002" for bits 0-15 in line 6,
- and PID "15" for bits 16-31 in line 6
indicate a particular SCC packet 4000 where the entire 64 Bytes of payload at lines 7-22 are never used. By analyzing those fields and recognizing the predetermined values, the packet analyzer 3210 can recognize that the SCC packet 4000 currently being analyzed has the possibility to carry a payload up to 64 Bytes. This information is shared with the packet builder 3220 which, if service channel information is to be transmitted, is now informed that up to 64 Bytes of service channel information can be inserted within the SCC packet 4000.

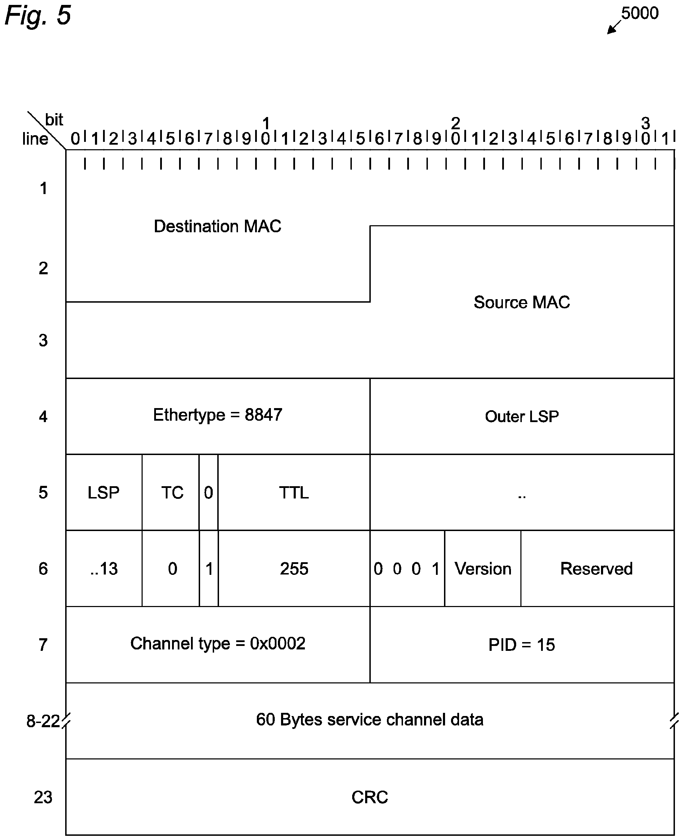

Figure 5 schematically illustrates the structure of a possible modified SCC packet 5000, after the modification carried by the packet builder 3220 to insert service channel information, in accordance with an embodiment of the invention.

In the specified example, service channel information up to 60 Bytes has been inserted in the lines 8-22. The remaining 4 Bytes have been used in line 5 to carry information not related to service channel. In particular those 4 Bytes allow the modified packet 5000 to carry an address which may be used, as will be explained below, in case that the modified SCC packet 5000 may be sent to a plurality of different receivers, each given one address, so that a given receiver can recognize if the modified SCC packet 5000 is directed to it or not. It will however be clear that, in case of a single receiver, an address may not be necessary and therefore not implemented. It will also be clear that the modification of the 4 Bytes illustrated in the specific example is only one possible way of implementing the address and the skilled person will recognize that different address implementations are possible.

In particular, when comparing the SCC packet 4000 and the modified SCC packet 5000, the following fields have not been modified:
- Destination MAC: this is the destination MAC address defining the receiver MAC address and as such remains unchanged so as to allow correct routing of the SCC packet 5000,
- Source MAC: this is the Emitter MAC address defining the Emitter MAC address and as such remains unchanged so as to allow correct routing of the SCC packet 5000,
- Ethertype: this describes the Ethernet protocol packet type, as an example 8847 stands for MPLS,
- "0x0002" is a Channel Type, always set as "2" for SCC packets as defined at https://tools.ietf.org/html/rfc5718,
- "15" is a PID field, Packet Identifier type. This identifies the type of the SCC message and associated communication protocol.

The following fields have been added in line 5 by moving lines 5 and 6 of SCC packet to lines 6 and 7. This is only one possible implementation and the following fields could have been added in any part of the SCC packet 4000. The added fields are:
- Outer LSP, where the original outer LSP of line 4 bits 16-31 is moved to line 5 bits 16-31, which is used as part of a destination address for the service channel information as described above,
- inner LSP, which is used as the sending part of a destination address for the service channel information as described above,
- TC, Traffic Class: this defines the priority packet level. As an example of use, if an equipment needs to prioritize packets, prioritization process will be based on TC identification,
- "0": this is a S-bit and provide information if the next field is composed of a label or not. In the provided example the S-bit value is "0" meaning that the next field is composed of an inner-label,
- TTL: "Time To Live" is a field that signifies the time that a packet still has before its life ends and is dropped. When an IP packet is sent, its TTL is usually 255 and is then decremented by 1 at each hop.

Those fields together form a MPLS tag which can be used as a destination address for the service channel information as described above. In this case, the service channel information comprises data, in lines 8 to 22 and an address for the data in line 4, bits 16-31 and in line 5, bits 0 to 15. As mentioned, it will be clear to those skilled in the art that alternative address codifications may be used. It will also be clear that, in some cases, no addressing may be needed, if there is a single receiver for the service channel information.

In alternative, or in addition:
- in lines 8-22 the service channel information can be added by the packet builder 3220 as needed, up to 60 Bytes. In those cases where no addressing is used, the fields in lines 4 and 5 are not modified and the service channel information can be added by the packet builder 3220 as needed, up to 64 Bytes.

As can be seen, the total dimension of the SCC modified packet 5000 is the same as that of the SCC packet 4000. This advantageously allows the sending of the service channel information without changing the latency of the packets. In alternative, or in addition, in some embodiments it may also be possible to increase the size of the SCC modified packet 5000 compared to that of the SCC packet 4000. In particular, in those cases where the Inter-Frame gap is higher than 16 bytes, this may be recognized by the encryption unit 3200 and a number of bits equal to, or smaller than, the difference between the recognized value of the inter-frame gap and the minimum value of 16 Bytes may be used to increase the size of the SCC modified packet 5000.

When the modified SCC packet 5000 is received at the decryption unit 3400, it can be recognized in different manners. In some embodiments, the decryption unit 3400 can recognize, at the packet analyzer 3420, all SCC packets and analyze the fields which have been modified according to a predetermined convention, in the exemplary case above lines 8-22 and line 4, bits 16-31 and in line 5, bits 0 to 15. In some other embodiments, the packet analyzer 3420 can first analyze the address in lines line 4, bits 16-31 and in line 5, bits 0 to 15 and only read the data in lines 8-22 if it determines a correspondence between the read address and its own address. With reference to the example described above, if the address of the packet, which can be the outer LSP in line 4, bits 16-31, corresponds to the address of the decryption unit 3400, the decryption unit can conclude that the incoming packet needs to be evaluated and the service channel information stored therein is to be used at the decryption unit 3400. Moreover, in both those cases, due to the possibility of receiving different kinds of SCC packets, in order to avoid having to analyze the content of all of them, the packet analyzer 3420 can also first analyze the type of the SCC packet to determine if it corresponds to the type of SCC packets which may be used by the encryption unit 3200. In the example above, the encryption unit 3200 can use - provided there is service channel information to be transmitted, SCC packets with the combination of
- ethertype "8847" for bits 0-15 in line 4
- outerlabel "..13" for bits 0-4 in line 5,
- channel type "0x0002" for bits 0-15 in line 6,
- and PID "15" for bits 16-31 in line 6.

By first checking those values, the packet analyzer 3420 can then only check the content of those SCC packets fitting these criteria.

It will be clear that this specific kind of SCC packet is only one possible SCC packet which may be used and alternative SCC packets may also be used to implement the invention. In these alternative cases, the predetermined fields checked by the packet analyzer 3210 in order to determine if the packet can be used will be the same predetermined fields checked by the packet analyzer 3420 to determine if the content of the incoming packet needs to be evaluated.

In yet alternative embodiments, in order to advantageously allow the decryption unit 3420 to quickly recognize a modified SCC packet 5000 from a non modified SCC packet 4000, the value of the PID and/or of the ethertype, or more generally of any field, can be set by the encryption unit 3200 to a predetermined value, or to a predetermined value combination in case two or more fields are modified, which is not contemplated by the SCC standard. In this manner the decryption unit 3400 can quickly and efficiently recognize those SCC packets which have been modified. It will be clear that, in those embodiments, if the service channel information is detected by the decryption unit 3400 to be directed to itself, the decryption unit 3400 can also proceed to restore the value, or the value combination, to the value contemplated by the standard. As an example, the PID value may be changed by the encryption unit 3200 from 15 to 14 and back to 15 by the decryption unit 3400.

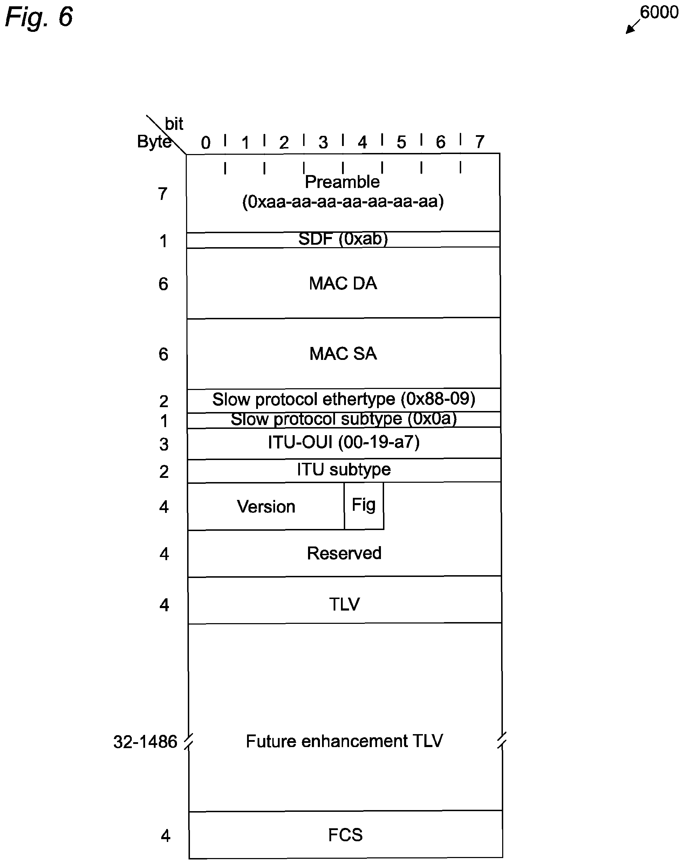

Figure 6 schematically illustrates the structure of an ESMC, for Ethernet Synchronization Messaging Channel, packet 6000 which can, in a specific non-limiting embodiment, be the type of packet used for transmitting the service channel information. A more detailed specification of possible ESMC packets which could be employed in other embodiments of the invention can be found in the respective standard UIT-T Rec. G.8264.

The implementation with the EMSC packet 6000 can be similar to the already described exemplary implementation with the SCC packet 4000. In particular, it will be clear that also in this case some fields of the EMSC packet 6000 can be modified so as to include service channel information, itself including data and eventually address information. It will also be clear that some fields may be modified to have a value or value combination not foreseen by the standard so as to signal that the EMSC packet 6000 has been modified. It will further be clear that various types of EMSC packet 6000 can be used for implementing the invention.

In the exemplary embodiment illustrated in figure 6, the fields which are evaluated by the packet analyzer to recognize predetermined values so as to recognize an appropriate ESMC packet can be:
- the Slow protocol ethertype, equal to a predetermined value of 0x88-09,
- the Slow protocol subtype, equal to a predetermined value of 0x0a,
- the ITU-OUI, equal to a predetermined value of 00-19-a7.

As previously described with reference to the SCC, also in this case this specific combination is only one possible implementation and the present invention is not limited thereto.

One advantage of such specific combination resides in that the ESMC packet 6000 identified by this combination comprises in Bytes 32-1486 available space for "future enhancement TV" which is currently not used. This space can be used for transmitting service channel information. By already knowing how much space is available, the invention can advantageously size the service channel information up to the total available space.

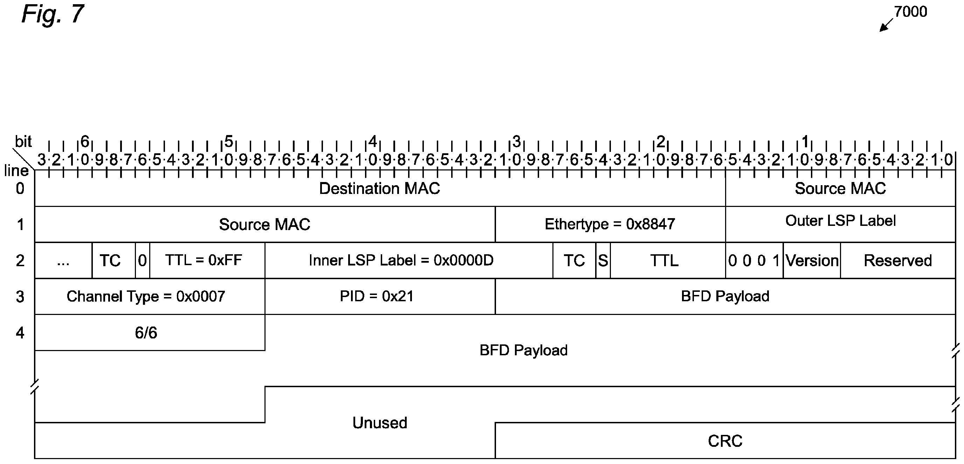

Figure 7 schematically illustrates the structure of a BFD packet 7000 which can, in a specific non-limiting embodiment, be the type of packet used for transmitting the service channel information. A more detailed specification of possible BFD packets which could be employed in other embodiments of the invention can be found in the respective standard RFC5880 available at https://tools.ietf.org/html/rfc5880.

Also in this case, the implementation can be similar to the already described exemplary implementation with the SCC packet 4000 and/or the ESMC packet 6000. In particular, it will be clear that also in this case some fields of the BFD packet 7000 can be modified so as to include service channel information, itself including data and eventually address information. It will also be clear that some fields may be modified to have a value or value combination not foreseen by the standard so as to signal that the BFD packet 7000 has been modified. It will further be clear that various types of BFD packet 7000 can be used for implementing the invention.

In the exemplary embodiment illustrated in figure 7, the fields which are evaluated by the packet analyzer to recognize predetermined values so as to recognize an appropriate ESMC packet can be:
- ethertype equal to 0x8847,
- channel type equal to 0x0007
- PID equal to Ox21

Figure 3C schematically illustrates a cryptographic unit 3500 in accordance with an embodiment of the invention.

In particular, the cryptographic unit 3500 is configured for decrypting and/or decrypting at least one packet P1, P2 according to a predetermined cryptographic protocol, wherein the predetermined cryptographic protocol requires exchanging of service channel information, wherein the service channel information has a first bit length.

The cryptographic unit 3500 comprises a packet receiver 3510 configured to determine if at least one of the packets P1, P2 comprises service channel information and to remove service channel information from the packet P1, P2. That is, the packet receiver 3510 operates as combination of the previously described packet analyzer 3420 and of the packet reader 3430.

The cryptographic unit 3500 further comprises an encryption/decryption engine 3520 configured to encrypt and/or decrypt the packet P1, P2 in a manner similar to the previously described encryption engine 3230 and decryption engine 3410.

The cryptographic unit 3500 further comprises a packet sender 3530 configured to recognize whether at least one of the packets P1, P2 has unused bit and to insert service channel information in the packet P1, P2 if the number of unused bits is equal to or larger than the first bit length. That is, the packet sender 3530 operates as combination of the previously described packet analyzer 3210 and of the packet builder 3220.

In some advantageous embodiments, the functionality of the packet analyzer 3210 of the packet sender 3530 can be carried out by the packet analyzer 3420 of the packet receiver 3510. In particular, since the packet analyzer 3420 of the packet receiver 3510 is capable of determining whether a packet P1, P2 comprises service channel information, it can inform the packet sender 3530 since this information will be extracted by the packet reader 3430 thereby leaving space in the packet P1, P2 which is subsequently transferred to the packet sender 3530.

The cryptographic unit 3500 therefore advantageously allows to receive and/or transmit service channel information without modifying the latency of the packets P1, P2. This is particularly advantageous to be used in network points at which packets are both transmitted and received.

In yet another embodiment, the encrypted channel 1300 can be a single physical channel including a plurality of logically encrypted channels. Each of the logically encrypted channel can be established between a given encryption unit 3200 and a given decryption unit 3400, or between any two cryptographic units 3500. In this case, the service channel information can further comprise information for identifying the logically encrypted channel and/or the decryption unit 3400, or the cryptographic unit 3500, to which the service channel information is destined. This information can be part, for instance, part of the address component of the service channel information described above.

As an example, a plurality of cryptographic units 3500 can be connected in series, such as cryptographic unit A, B and C, defining between each couple of cryptographic unit one physical channel 1300 comprising a plurality of logically encrypted channels, such as channels C1 and C2 between A and B and channels C3 and C4 between B and C. In this exemplary configuration, service channel information may be exchanged between and cryptographic unit 3500 A, B or C and relating to any logically encrypted channel C1-C4. At any given cryptographic unit 3500, the cryptographic unit 3500 can examine the incoming packet to recognize if it is a modified packet and evaluate the whether the modified packet is directed to itself. If so, the cryptographic unit 3500 can proceed to extract the content of the service channel information, return the packet to its original configuration by removing the modifications carried out upon inserting the service channel information, and apply the received service channel information to the specific logically encrypted channel to which the information relates. Alternatively, or in addition in case the service channel information is destined to a plurality of cryptographic unit 3500, or in case it is destined to another cryptographic unit 3500, the cryptographic unit 3500 can forward the packet without modifying it.

The invention has been described with reference to separate embodiments, for the purpose of better clarifying different possible implementations of the invention. It will however be clear that the invention is defined by the claims and is not limited to any specifically indicated embodiment. Furthermore, different features of different embodiments can be combined together, as will be clear to the skilled person, resulting in further additional embodiments of the invention.

### List of reference numerals

- 1000:: network
- 1100:: transmitter
- 1200:: encryption unit
- 1300:: encrypted channel
- 1400:: decryption unit
- 1500:: receiver

- 3000:: network
- 3200:: encryption unit
- 3210:: packet analyzer
- 3220:: packet builder
- 3230:: encryption engine
- 3400:: decryption unit
- 3410:: decryption engine
- 3420:: packet analyzer
- 3430:: packet reader
- 3500:: cryptographic unit
- 3510:: packet receiver
- 3520:: encryption/decryption engine
- 3530:: packet sender

- 4000:: SCC packet

- 5000:: SCC modified packet

- 6000:: ESMC packet

- 7000:: BFD packet

## Claims

1. An encryption unit (3200) for encrypting at least one packet (P1, P2) according to a predetermined cryptographic protocol, wherein the predetermined cryptographic protocol requires exchanging of service channel information, wherein the service channel information has a first bit length, the encryption unit comprising:
a packet analyzer (3210) configured to recognize whether at least one packet (P1, P2) has unused bits,
a packet builder (3220) configured to insert service channel information in the packet (P1, P2) if the number of unused bits is equal to or larger than the first bit length,
an encryption engine (3230) configured to encrypt the packet (P1, P2) according to the predetermined cryptographic protocol,
wherein the packet (P1, P2) is a SCC packet (5000) of a Multiprotocol Label Switching Protocol, or an ESMC packet (6000) of a Multiprotocol Label Switching Protocol, or a BFD
packet (7000) according to the RFC5880 standard.

2. The encryption unit (3200) according to claim 1,
wherein the packet analyzer (3210) is configured to recognize whether the packet (P1, P2) has unused bits by:
- recognizing a predetermined value within the packet, and/or
- recognizing a specific value for one or more fields of the packet.

3. The encryption unit (3200) according to claim 1,
wherein the service channel information comprises data and/or an address for the data.

4. A decryption unit (3400) for decrypting at least one packet (P1, P2) according to a predetermined cryptographic protocol, wherein the predetermined cryptographic protocol requires exchanging of service channel information, wherein the service channel information has a first bit length, the decryption unit comprising:
a decryption engine (3410) configured to decrypt the packet (P1, P2),
a packet analyzer (3420) configured to determine if at least one of the packets (P1, P2) comprises the service channel information,
a packet reader (3430) configured to remove the service channel information from the packet (P1, P2),
wherein the packet (P1, P2) is a SCC packet (5000) of a Multiprotocol Label Switching Protocol, or an ESMC packet (6000) of a Multiprotocol Label Switching Protocol, or a BFD packet according to the RFC5880 standard.

5. The decryption unit (3400) according to claim 4, wherein the packet analyzer (3420) is configured to recognize whether the packet (P1, P2) comprises the service channel information by:
- recognizing a predetermined value within the packet, and/or
- recognizing a specific value for one or more fields of the packet.

6. A cryptographic unit (3500) for encrypting and/or decrypting at least one packet (P1, P2) according to a predetermined cryptographic protocol, wherein the predetermined cryptographic protocol requires exchanging of service channel information, wherein the service channel information has a first bit length, the cryptographic unit comprising:
a packet receiver (3510) configured to determine if at least one of the packets (P1, P2) comprises service channel information and to remove service channel information from the packet (P1, P2),
an encryption/decryption engine (3520) configured to encrypt and/or decrypt the packet (P1, P2),
a packet sender (3530) configured to recognize whether at least one of the packets (P1, P2) has unused bit and to insert service channel information in the packet (P1, P2) if the number of unused bits is equal to or larger than the first bit length,
wherein the packet (P1, P2) is a SCC packet of a Multiprotocol Label Switching Protocol, or an ESMC packet (6000) of a Multiprotocol Label Switching Protocol, or a BFD packet according to the RFC5880 standard.

## Patentansprüche

1. Verschlüsselungseinheit (3200) zum Verschlüsseln mindestens eines Pakets (P1, P2) gemäß einem vorbestimmten kryptographischen Protokoll, wobei das vorbestimmte kryptographische Protokoll einen Austausch einer Dienstkanalinformation erfordert, wobei die Dienstkanalinformation eine erste Bitlänge aufweist, wobei die Verschlüsselungseinheit umfasst:
einen Paketanalysator (3210), welcher ausgestaltet ist, um zu erkennen, ob zumindest ein Paket (P1, P2) unbenutzte Bits aufweist,
einen Paketbauer (3220), welcher konfiguriert ist, um Dienstkanalinformation in das Paket (P1, P2) einzufügen, wenn die Anzahl von unbenutzten Bits gleich oder größer als die erste Bitlänge ist,
eine Verschlüsselungsmaschine (3230), welche ausgestaltet ist, um das Paket (P1, P2) gemäß dem vorbestimmten kryptographischen Protokoll zu verschlüsseln,
wobei das Paket (P1, P2) ein SCC-Paket (5000) eines Multiprotokoll-Label-Switching-Protokolls oder ein ESMC-Paket (6000) eines Multiprotokoll-Label-Switching-Protokolls oder ein BFD-Paket (7000) gemäß dem RFC5880-Standard ist.

2. Verschlüsselungseinheit (3200) nach Anspruch 1,
wobei der Paketanalysator (3210) ausgestaltet ist, um zu erkennen, ob das Paket (P1, P2) unbenutzte Bits aufweist, indem:
- ein vorbestimmter Wert in dem Paket erkannt wird, und/oder
- ein bestimmter Wert für einen oder für mehrere Bereiche des Pakets erkannt wird.

3. Verschlüsselungseinheit (3200) nach Anspruch 1,
wobei die Dienstkanalinformation Daten und/oder eine Adresse für die Daten umfasst.

4. Entschlüsselungseinheit (3400) zum Entschlüsseln mindestens eines Pakets (P1, P2) gemäß einem vorbestimmten kryptographischen Protokoll, wobei das vorbestimmte kryptographische Protokoll einen Austausch einer Dienstkanalinformation erfordert, wobei die Dienstkanalinformation eine erste Bitlänge aufweist, wobei Entschlüsselungseinheit umfasst:
eine Entschlüsselungsmaschine (3410), welche ausgestaltet ist, um das Paket (P1, P2) zu entschlüsseln,
einen Paketanalysator (3420), welcher ausgestaltet ist, um zu bestimmen, ob zumindest eines der Pakete (P1, P2) die Servicekanalinformation umfasst,
einen Paketleser (3430), welcher ausgestaltet ist, um die Dienstkanalinformation von dem Paket (P1, P2) zu entfernen,
wobei das Paket (P1, P2) ein SCC-Paket (5000) eines Multiprotokoll-Label-Switching-Protokolls oder ein ESMC-Paket (6000) eines Multiprotokoll-Label-Switching-Protokolls oder ein BFD-Paket gemäß dem RFC5880-Standard ist.

5. Entschlüsselungseinheit (3400) nach Anspruch 4, wobei der Paketanalysator (3420) ausgestaltet ist, um zu erkennen, ob das Paket (P1, P2) die Servicekanalinformation umfasst, indem:
- ein vorbestimmter Wert in dem Paket erkannt wird, und/oder
- ein bestimmter Wert für einen oder für mehrere Bereiche des Pakets erkannt wird.

6. Kryptographische Einheit (3500) zum Verschlüsseln und/oder Entschlüsseln von mindestens einem Paket (P1, P2) gemäß einem vorbestimmten kryptographischen Protokoll, wobei das vorbestimmte kryptographische Protokoll einen Austausch einer Dienstkanalinformation erfordert, wobei die Dienstkanalinformation eine erste Bitlänge aufweist, wobei die kryptographische Einheit umfasst:
einen Paketempfänger (3510), welcher ausgestaltet ist, um zu bestimmen, ob zumindest eines der Pakete (P1, P2) eine Dienstkanalinformation umfasst, um die Dienstkanalinformation von dem Paket (P1, P2) zu entfernen,
eine Verschlüsselungs-/Entschlüsselungs-Maschine (3520), welche ausgestaltet ist, um das Paket (P1, P2) zu verschlüsseln und/oder zu entschlüsseln,
einen Paketsender (3530), welcher ausgestaltet ist, um zu erkennen, ob zumindest eines der Pakete (P1, P2) ein unbenutztes Bit aufweist, und um eine Dienstkanalinformation in das Paket (P1, P2) einzufügen, wenn die Anzahl von unbenutzten Bits gleich oder größer als die erste Bitlänge ist,
wobei das Paket (P1, P2) ein SCC-Paket eines Multiprotokoll-Label-Switching-Protokolls oder ein ESMC-Paket (6000) eines Multiprotokoll-Label-Switching-Protokolls oder ein BFD-Paket gemäß dem RFC5880-Standard ist.

## Revendications

1. Unité de chiffrement (3200) for chiffrer au moins un paquet (P1, P2) selon un protocole cryptographique prédéterminé, dans laquelle le protocole cryptographique prédéterminé nécessite l'échange d'information de canal de service, dans laquelle l'information de canal de service a une première longueur de bit, l'unité de chiffrement comprenant :
un analyseur de paquets (3210) configuré pour reconnaître si au moins un paquet (P1, P2) a des bits non utilisés,
un constructeur de paquets (3220) configuré pour insérer information de canal de service dans le paquet (P1, P2) si le nombre de bits non utilisés est égal ou supérieur à la première longueur de bit,
un moteur de chiffrement (3230) configuré pour chiffrer le paquet (P1, P2) selon le protocole cryptographique prédéterminé.
dans laquelle le paquet (P1, P2) est un paquet SCC (5000) d'un protocole Multiprotocol Label Switching, ou un paquet ESMC (6000) d'un protocole Multiprotocol Label Switching ou un paquet BFD (7000) selon la norme RFC5880.

2. L'unité de chiffrement (3200) selon la revendication 1,
dans laquelle le analyseur de paquets (3210) est configuré pour reconnaître si le paquet (P1, P2) a des bits non utilisés par :
- la reconnaissance d'une valeur prédéterminée dans le paquet, et/ou
- la reconnaissance d'une valeur spécifique pour un ou plusieurs champs du paquet.

3. L'unité de chiffrement (3200) selon la revendication 1,
dans laquelle l'information de canal de service comprend des données et/ou une adresse pour les données.

4. Unité de décryptage (3400) pour décrypter au moins un paquet (P1, P2) selon un protocole cryptographique prédéterminé, dans laquelle le protocole cryptographique prédéterminé nécessite l'échange d'information de canal de service, dans laquelle l'information de canal de service a une première longueur de bit, l'unité de décryptage comprenant:
un moteur de décryptage (3410) configuré pour décrypter le paquet (P1, P2),
un analyseur de paquets (3420) configuré pour déterminer si au moins un des paquets (P1, P2) comprend l'information de canal de service,
un lecteur de paquets (3430) configuré pour supprimer l'information de canal de service du paquet (P1, P2),
dans laquelle le paquet (P1, P2) est un paquet SCC (5000) d'un protocole Multiprotocol Label Switching, ou un paquet ESMC (6000) d'un protocole Multiprotocol Label Switching ou un paquet BFD selon la norme RFC5880.

5. L'unité de décryptage (3400) selon la revendication 4, dans laquelle l'analyseur de paquets (3420) est configuré pour reconnaître si le paquet (P1, P2) comprend l'information de canal de service par :
- la reconnaissance d'une valeur prédéterminée dans le paquet, et/ou
- la reconnaissance d'une valeur spécifique pour un ou plusieurs champs du paquet.

6. Unité cryptographique (3500) pour chiffrer et/ou décrypter au moins un paquet (P1, P2) selon un protocole cryptographique prédéterminé, dans laquelle le protocole cryptographique prédéterminé nécessite l'échange d'information de canal de service, dans laquelle l'information de canal de service a une première longueur de bit, l'unité cryptographique comprenant :
un récepteur de paquets (3510) configuré pour déterminer si au moins un des paquets (P1, P2) comprend information de canal de service et pour supprimer information de canal de service du paquet (P1, P2),
un moteur de chiffrement/décryptage (3520) configuré pour chiffrer et/ou décrypter le paquet (P1, P2),
un émetteur de paquets (3530) configuré pour reconnaître si au moins un des paquets (P1, P2) a des bits non utilisés et pour insérer information de canal de service dans le paquet (P1, P2) si le nombre de bits non utilisés est égal ou supérieur à la première longueur de bit,
dans laquelle le paquet (P1, P2) est un paquet SCC d'un protocole Multiprotocol Label Switching, ou un paquet ESMC (6000) d'un protocole Multiprotocol Label Switching ou un paquet BFD selon la norme RFC5880.
